(19) Europäisches Patentamt
European Patent Office
Office européen des brevets

(11) EP 0 197 242 B1

(12) EUROPEAN PATENT SPECIFICATION

(45) Date of publication and mention of the grant of the patent: **27.05.1998 Bulletin 1998/22**

(51) Int Cl.6: **C08G 59/14**, C08L 63/00, C08J 3/02

(21) Application number: **86100465.3**

(22) Date of filing: **15.01.1986**

(54) **Organic spherical particles and process for their production**

Organische, kugelförmige Teilchen und Verfahren zu ihrer Herstellung

Particules organiques sphériques et procédé pour leur préparation

(84) Designated Contracting States:
**AT BE CH DE FR GB IT LI LU NL SE**

(30) Priority: **17.01.1985 JP 6608/85**

(43) Date of publication of application:
**15.10.1986 Bulletin 1986/42**

(73) Proprietor: **TORAY INDUSTRIES, INC.**
**Tokyo 103 (JP)**

(72) Inventor: **Koichiro, Oka**
**Ibaraki-shi Osaka-fu (JP)**

(74) Representative: **Kador & Partner**
**Corneliusstrasse 15**
**80469 München (DE)**

(56) References cited:
**EP-A- 0 174 390**
**FR-A- 2 176 143**
**FR-A- 2 295 456**
**US-A- 4 186 086**
**US-A- 4 299 898**
**US-A- 4 378 419**

Remarks:
The file contains technical information submitted after the application was filed and not included in this specification

EP 0 197 242 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to particles composed of organic spherical particles having an average particle size of 0.1 - 1000 μm and containing a cationic group, which particles have adsorbed on the surface one or more selected from fine particles having an anionic group and negatively chargeable fine particles such that the particles have surface properties and optical characteristics different from those of the original particles, and also to a process for their production.

The present inventor has previously presented in U. S. Patent Application Serial No. 651,362 a process for producing spherical particles a cured epoxy resin having an average particle size of not larger than 50 μm and having a cationic group, which comprises adding an amine curing agent to a previously prepared emulsion or suspension of an uncured epoxy compound.

Japanese Patent Publication No. 53-42360 discloses a process for producing spherical particles of a cured epoxy resin having an average particle size of several hundred μm and having a cationic group which comprises dispersing a mixture of an epoxy compound having at least two epoxy groups and an amine curing agent in water.

Japanese Patent Application Kokai Publication No. 59-66406 (Official Gazette) discloses a process for producing acrylic polymer spherical particles having an average particle size of 8 - 80 μm and optionally containing a cationic group.

However, none of these inventions teach or suggest such particles and process for the production as those disclosed in the present invention, that is, modified spherical particles having adsorbed thereon fine particles having an anionic group or negatively chargeable fine particles, and a process for their production.

An object of this invention is to provide modified organic spherical particles composed of organic spherical particles having an amino group and having an average particle size of 0.1 - 1000 μm, which particles have adsorbed on the surface metal particles or latex particles.

A still further object of this invention is to provide a process for the production of organic spherical fine particles which comprises emulsifying or suspending a monomer or oligomer, thereafter curing the particles with a curing agent to form a particulate polymer and subjecting them to a wet process thereby adsorbing on the surface of said particles one or more selected from fine metal or latex particles.

A still further object of this invention is to provide particles which may be employed as formulation ingredients for cosmetics, paints, electrostatic copier toners, conductive adhesives etc., and a process for their production.

According to the present invention surface modified organic spherical particles are provided which are obtainable by a) emulsifying or suspending a polyepoxide compound in an aqueous liquid, adding to this uncured epoxy suspension or emulsion a water soluble amine curing agent, allowing this emulsion to cure in spherical particles having an average particles size D of 0.1-1000 micrometer and thereafter b) making said particles adsorb on the surface metal or latex fine particles having an average particle size d which satisfies the relationship $5d<=D$, using a wet process.

The organic spherical particles having a cationic group and having an average particle size of 0.1 - 1000 μm which constitute the present invention may be generally produced from an epoxy compound cured with an amine curing agent or from an acrylic polymer containing an amino group.

The epoxy spherical particles having an average particle size of 0.1 - 1000 μm may be generally produced as follows.

There is a process which comprises emulsifying or suspending an uncured epoxy resin in an aqueous liquid and thereafter curing it

The epoxy compound used in this invention is preferably that containing two or more epoxy groups. Examples thereof include both terminal glycidyl etherified products of a Bisphenol A type compound, polyethylene glycol diglycidyl ethers, polyglycidyl ethers of phenol novolak type compounds, N,N,N',N'-tetraglycidyl-m-xylenediamine etc. which may be used either alone or in mixture. Further, it is possible to add a small amount of a compound having one epoxy group in the molecule, e.g. glycidyl methacrylate etc. as needed. Further, a modified epoxy compound in which a part of the epoxy groups are combined with a compound having an amino group etc. may be used in this invention.

In the process, particles of an epoxy compound emulsified or suspended in an aqueous liquid are cured with an amine curing agent. The curing method comprises adding a water-soluble amine curing agent to an aqueous emulsion or suspension of an epoxy resin and curing.

The method which comprises adding a water-soluble amine curing agent to an aqueous emulsion or suspension of an epoxy compound (the latter method) may further be classified as follows:

(A) A method which comprises upon adding a water-soluble curing agent to an epoxy compound emulsion or suspension to cure into a spherical form, using a water-soluble curing agent containing piperazine or a piperazine derivative of the following general formula:

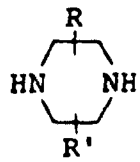

wherein R and R' represent each a hydrogen atom or a hydrocarbon residue of 1 - 4 carbon atoms, in an amount of 0.15 equivalent or more as stoichiometrically calculated based on the epoxy equivalent of the emulsion or suspension of the epoxy compound.

(B) A method which comprises upon adding a water-soluble curing agent to an emulsion or suspension of an epoxy compound to cure into a spherical form, using a water-soluble curing agent which contains hydrazine or a hydrazine derivative of the following general formula:

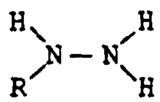

wherein R represents hydrogen, an alkyl group of up to 5 carbon atoms, a phenyl group or a 2-hydroxyethyl group, in an amount of 0.2 equivalent or more as stoichiometrically calculated based on the epoxy equivalent of the emulsion or suspension of the epoxy compound.

(C) A method which comprises adding a water-soluble curing agent to an emulsion or suspension of an epoxy compound to cure into a spherical form to produce spherical epoxy type particles having an average particle size of 0.5 - 50 μm,

(I) the emulsion or suspension of the epoxy compound being prepared by adding a surface-active agent having an HLB of 12 or higher in an amount of 10% by weight or more based on the epoxy compound,

(II) the water-soluble curing agent being an amine which, when mixed with an equivalent amount of the aforesaid epoxy resin at normal temperature and the resulting mixture is allowed to stand for 8 hours, has a Shore A hardness of 70 or higher, and this water-soluble curing agent being added in an amount of 0.5 equivalent or more based on the epoxy compound.

Any of the above-described methods may be employed to achieve the present invention, and there is no particular restriction, but those according to the aforesaid (A), (B) and (C) are particularly preferred in view of the uniformity in shape of the particles and the uniformity of the particle size distribution.

Examples of the amine curing agent used in the second process generally include but are not restricted to the following compounds: piperazine, hydrazine, polyethylenepolyamines such as ethylenediamine, diethylenetriamine, triethylenetetramine etc., alcoholamines such as monoethanolamine etc., N-(2-aminoethyl)-piperazine etc.

In the second process, an aqueous emulsion or suspension of an epoxy compound is prepared, and examples of the method therefor are described below:

(1) A method which comprises continuously ejecting an epoxy compound or its solution from a nozzle vibrating in air or in a liquid thereby cutting into liquid droplets, and collecting them in a liquid.

(2) A method which comprises ejecting an epoxy compound or its solution in a pulse form from a nozzle in air or in a liquid, and collecting them in a liquid.

(3) A method which comprises emulsifying by using a combination of an epoxy compound containing a surface-active agent and water.

(4) A method which comprises emulsifying by using a combination of a powdered emulsifier, an epoxy compound and water.

(5) A method which comprises emulsifying by using a combination of water containing a protective colloidal substance and an epoxy compound.

Of the above-described methods, while the methods (3) - (5) are preferably used in the present invention in view of the productivity, combinations of the methods (1) - (5) may also be preferably used in the present invention.

The surface-active agent is not particularly restricted in the above-described methods (A) and (B) for obtaining

epoxy type spherical particles, and any of those generally known as emulsifiers for uncured epoxy resins, such as polyoxyethylene phenol-substituted ethers etc. may safely be used. As the surface-active agent for use in the above method (C), that having an HLB value of 12 or more is used in an amount of 10% by weight or more based on the epoxy compound. Where the HLB value does not satisfy this range, there is a tendency that curing into a spherical form is not attained even when the above-described specific amine curing agent is used.

In general, examples of the surface-active agent preferably used in the second process include ether type nonionic surface-active agents such as polyoxyethylene phenol-substituted ether types, polyoxyethylene-polyoxypropylene block polyether types etc., ester type nonionic surface-active agents such as higher fatty acid esters of polyethylene glycol, aliphatic acid esters of polyols etc., and the like.

Where a powdered emulsifier such as crystalline cellulose, barium sulfate etc. is used, it is a method suitable for producing relatively large particles of an average particle size of 10 - 1000 μm.

It is also possible in the present invention to effect the emulsification by using a substance exhibiting a protective colloidal effect such as polyvinyl alcohol, hydroxymethyl cellulose, sodium alginate etc.

Where the epoxy compound is emulsified or suspended by using a surface-active agent, a powdered emulsifier or a protective colloid substance, it is general to adopt a method which comprises using an epoxy compound and water, either of which contains one of the above agents, and gradually adding water to the epoxy compound stirred at a high speed. The formed emulsion or suspension usually has a concentration of 10 - 80% by weight.

For adding an amine curing agent to an emulsion or suspension of an epoxy compound, it is general to add the curing agent either directly or as an aqueous solution. Although the curing agent can be a mixed system with another amine curing agent or with a curing agent of a different type, it preferably satisfies the particular use conditions for the above-described particular curing agent.

In the process, where the epoxy compound is firstly made into an aqueous emulsion or suspension and the curing agent is added, then after the addition of the curing agent, a curing reaction is allowed to take place while the mixture is allowed to stand or under mild stirring conditions. If it is desired to obtain a satisfactory cured state, there is a method of warming the entire system.

The organic spherical particles having a cationic group used in the present invention may be prepared by the above-described processes, and those used in the present invention are particles having an average particle size of 0.1 - 1000 μm, preferably 0.5 - 500 pm. If the average particle size is less than 0.1 pm, the collecting of the particles is difficult, whereas if it exceeds 1000 μm, they are unsuitable for use as formulation ingredients for cosmetics, paints etc. for reasons of extraneous feeling, sedimentation etc.

Examples of the solid fine articles used in this invention include metal fine powders and colloidal particles of copper, silver, gold, platinum, palladium, nickel, chromium etc. are particularly contemplated.

Examples of the latex type used in the present invention include acrylonitrile/butadiene type latexes, acrylate latexes, styrene/butadiene type latexes, vinyl chloride type latexes, vinyl acetate/ethylene type latexes, vinyl chloride/vinyl acetate/ethylene type latexes, acryl/vinyl acetate/ethylene type latexes, isoprene type latexes, vinylidene chloride type latexes, fluorine polymer type latexes, silicone emulsions etc., and they may be used either singly or in mixture.

In the present invention, the average particle size D of the organic spherical particles and the average particle size d of the fine particles to be adsorbed preferably satisfy the following relationship:

$$5d \leqq D$$

As the average particle size d of the fine particles to be adsorbed becomes greater relative to the average particle size D of the organic spherical particles, the fine particles on the organic spherical particles tend to fall off. For this purpose, the relationship is more preferably in the range: $20d \leqq D$.

In order to make the organic spherical particles adsorb the above-described fine particles, the following methods are suitable.

(1) A slurry of the organic spherical particles and the fine particles are mixed and stirred. By this method, it often results in adsorption of only a small amount of the fine particles.

(2) The aforesaid mixture is heated and stirred at 50° C or above, preferably at 80° C or above. By this method, most of the fine particles can be adsorbed.

(3) A salting-out compound, such as sulfuric acid, phosphoric acid, acetic acid, hydrochloric acid, sodium chloride, aluminum chloride, caustic soda etc. is added to the aforesaid mixture and treated by stirring. Further, if needed, the temperature is elevated.

The latex has a tendency to change in the covered conditions depending on its glass transition temperature (Tg), and where Tg is in the vicinity of normal temperature or below, it covers the surface of the organic spherical particles

as a uniform coat, whereas if Tg is higher than the adsorption treatment temperature, it is present as small grains on the surface of the organic spherical particles. Therefore, by selecting the intermediate Tg, it is possible to freely control the covered conditions from the coat to the grains. Further, of the latexes having a low Tg, there are those capable of forming a crosslinking bond by heat or by addition of a crosslinking agent, and by selecting one of such latexes, it is possible to make a uniform coat on the surface of the organic spherical particles, and thereafter form a crosslinking bond by e.g. heating etc., thereby enhancing the thermal or mechanical properties of the coat.

On adsorption treatment, the organic spherical particles are preferably previously prepared as a slurry in water or an inert organic solvent. In order to make the fine particles adsorbed on and cover the surface of the organic spherical particles, a method of adsorption treatment in a slurry form is preferred. Although it is possible to make the fine particles in a dried form adsorbed on the organic spherical particles in a dried form, there is in general a tendency that the covered conditions are not uniform, and also mass treatment is difficult. However, where adsorption treatment is conducted in a wet mode as in the present invention, not only mass treatment and simple operations but also it is easy to uniformly cover the surface of each of the organic spherical particles.

The fine particles to be adsorbed are preferably preliminarily dispersed and made into a slurry in a manner similar to that for the organic spherical particles. For preliminary dispersing, a method using dispersant such as a surface-active agent may be conducted. As an example of the method, a liquid nonionic surface-active agent is added to the fine particles to be adsorbed, kneaded sufficiently, then diluted with water if needed, and thus dispersed uniformly.

Stirring of a mixture of both components for adsorption covering of the fine particles on the organic spherical particles can be achieved even by such small strength as that imparted by a magnet rotating blade, a propeller blade etc. equipped in a beaker, or it is also possible to use a high speed stirrer rotating at 10000 rpm or more such as a homogenizer, a ball mill, or a shaker etc. Further, adsorption covering may be achieved by a method in which a sealed container holding glass beads is subjected to shaking. Further, stirring treatment may also be achieved using a motar. By using these devices, it is also possible to conduct preliminary dispersing or make a slurry of the organic spherical particles or the fine particles to be adsorbed.

The amount of the fine particles to be adsorbed which is used in single treatment in the present invention is in general 200% by weight or less, preferably 100% by weight or less, based on the organic spherical particles. If the amount of the fine particles to be adsorbed increases beyond this, there is observed a tendency that the organic spherical particles agglomerate with each other during adsorption treatment or the fine particles fall off, and therefore uniform covering is impossible.

By the present invention, it has now been made possible to present surface modified particles obtained by freely covering fine particles or latex polymers on the surface of the organic spherical particles without being subject to the restriction by electrostatic properties as with the dry mode.

The effects achieved by the present invention are as follows:

(1) Change in optical properties has been enabled.
(2) Impartation of magneticity has been enabled.
(3) Impartation of electrical conductivity has been enabled.
(4) Change in electrostatic properties has been enabled.
(5) Change in hydrophilic or hydrophobic property has been enabled.
(6) Blocking of the particles has been prevented.
(7) Flow properties of the particles have been improved.
(8) Control of the slow release speed as microcapsules has been enabled.

As described above, the present invention has enabled to impart various desired properties to organic spherical particles and to present particles suitable as formulation ingredients for electrostatic copier toners, as well as for cosmetics, pharmaceuticals, paints, adhesives, coating agents, inks, paper, films, plastic molded products etc.

Example 1

Ten grams of a commercially available Bisphenol A diglycidyl ether type epoxy resin (Epikote 828, produced by Yuka-Shell Epoxy Co.) was placed in a 100 cc polyethylene cup, 0.8 g of a commercially available polyoxyethylene phenol substituted ether type surface-active agent having an HLB value of 13 (Noigen EA-137, produced by Dai-ichi Kogyo Seiyaku Co.) was added thereto, and kneaded using a stirring rod fitted with a Teflon plate-formed blade on the tip at 800 rpm for one minute. Thereafter, 6 cc of water put in a syringe was added in 1.5 cc portions at one-minute intervals with stirring at 800 rpm. A milky white emulsion was formed in the polyethylene cup.

To this uncured epoxy emulsion was added a curing solution containing 0.6 equivalent of piperazine dissolved in 8 cc of water and homogenized by mild stirring.

This liquid mixture was allowed to stand at 25° C for 5 days to cure into spherical particles having an average

particle size of about 6 µm.

Spherical particles having an average particle size of about 6 µm as above were separated by suction filtration using filter paper, washed, and redispersed in water to obtain a dispersion containing 10% by weight of the particles.

To this dispersion of the spherical particles was added a styrene-butadiene type latex, Nipole LX 410 (average particle size 0.2 µm, Nippon Geon) in an amount of 50% by weight on the solid basis based on the spherical particles and a small amount of phosphoric acid were added thereto and stirring was effected at 95°C for 5 hours. The whole amount of the latex had been adsorbed on the spherical particles, and observation of the particles after filtration and drying by a scanning electron microscopy revealed that the latex had covered in a coat form the entire surface of the spherical particles.

Example 2

To 40g of Epikote 828 in a 300 cc polyethylene cup were added 4g of Niogen EA-137. Proceeding as in Example 1, 24 cc of water was then added in four successive portions to prepare an uncured epoxy emulsion. 1.5 eq of hydrazine hydrate in 30g water was then added, and the resultant mixture allowed to cure by standing at 25°C for 10 days to obtain spherical particles of average particle size 1.5 µm. The particles were filtered, washed, redispersed in 400g of water, divided into four portions, and each portion treated as set forth in Table 2.

The treated particles obtained in Example 6 were filtered, then dried, and observed by a scanning electron microscopy to find that the fine particles of vinylidene chloride had covered the surface of the spherical particles.

Table 1

| Example | Latex | | | Treating Conditions | | Results of Treatment* |
|---|---|---|---|---|---|---|
| | Type | Trade Name | Amount used (wt %) | Acid | Temp. x Time | |
| 1-1 | Vinyl Acetate-Ethylene | Sumicaflex 510 (Sumitomo Chemical) 0.7 µm | 30 | Phosphoric Acid | 95° C x 1 hr | o |
| 1-2 | Vinyl Chloride-Ethylene-Vinyl Acetate | Sumicaflex 810 (Sumitomo Chemical) 0.4 µm | 30 | Phosphoric Acid | 95° C x 1 hr | o |
| 1-3 | Vinylidene Chloride | Kureharon DO-813 (Kureha Chemical) 0.5 µm | 80 | Phosphoric Acid | 95° C x 1 hr | o |
| 1-4 | Vinyl Chloride | Nipole GE 351 (Nippon Geon) 0.5 µm | 80 | None | 95° C x 1 hr | o |

*Results of Treatment: o: The whole amount adsorbed.

## Claims

1. Surface modified organic spherical particles obtainable by

   a) emulsifying or suspending a polyepoxide compound in an aqueous liquid, adding to this uncured epoxy suspension or emulsion a water soluble amine curing agent, allowing this emulsion to cure in spherical particles having an average particles size D of 0.1-1000 micrometer and thereafter
   b) making said particles adsorb on the surface metal or latex fine particles having an average particle size d which satisfies the relationship 5d<=D, using a wet process.

2. The organic spherical particles as defined in claim 1, which have a primary, secondary, tertiary or quaternary amine group.

3. The organic spherical particles as defined in Claim 1, wherein the particle sizes D and d satisfy the relationship:

$$20d \leqq D$$

4. The organic spherical particles as defined in Claim 1, wherein the metal fine particles are one or more selected from noble metal and solder particles.

5. The organic spherical particles as defined in Claim 1, wherein the latex particles are one or more selected from butadiene, acrylate, styrene vinyl acetate, ethylene, vinyl chloride, vinylidene chloride, fluorine polymer and silicone latexes.

6. A process for the production of organic spherical particles in accordance with claim 1 which comprises emulsifying or suspending a polyepoxy compound in an aqueous liquid then curing it with a water soluble amine curing agent to produce a particulate polymer with particles having an average particle sized of 0.1 - 1000 μm, and thereafter making said particles adsorb on the surface metal fine particles or latex particles having an average particle diameter d which satisfier the relationship 5d≤D, using a wet process.

7. The process for the production of organic spherical particles as defined in Claim 6, wherein the polyepoxy compound is cured with 0.15 equivalent or more of the water-soluble amine compound.

8. The process for the production of organic spherical particles as defined in Claim 7, wherein the water soluble amine compound is piperazine, hydrazine, a polyethylene polyamine, an alcoholamine or N-(2-aminoethyl)-piperazine.

9. The process for the production of organic spherical particles as defined in Claim 6, wherein the water-soluble amine compound is a piperazine derivative represented by the following formula (I):

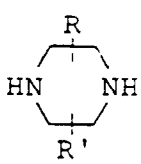

(I)

   wherein R and R' represent each a hydrogen atom or a hydrocarbon residue of 1 - 4 carbon atoms.

10. The process for the production of organic spherical particles as defined in Claim 6, wherein the water-soluble amine compound is a hydrazine derivative represented by the following formula (II):

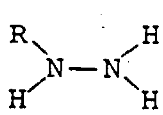

(II)

wherein R represents hydrogen, an alkyl group of up to 5 carbon atoms, a phenyl group or a 2-hydroxyethyl group.

**11.** The process for the production of organic spherical particles as defined in Claim 6, wherein the adsorption treatment is treatment by heating and stirring.

**12.** The process for the production of organic spherical particles as defined in Claim 6, wherein the adsorption treatment is treatment by stirring in the presence of a compound selected from sulfuric acid, phosphoric acid, acetic acid, hydrochloric acid, sodium chloride aluminum chloride and caustic soda.

**13.** The process for the production of organic spherical particles as defined in Claim 6, wherein the liquid is water.

**14.** The process for the production of organic spherical particles as defined in Claim 6 wherein the average particle size D of the organic spherical particles and the average particle size d of the fine particles are in the following relationship:

$$5d \leqq D$$

**15.** The process for the production of organic spherical particles as defined in Claim 6, wherein the average particle size D of the organic spherical particles and the average particle size d of the fine particles are in the following relationship:

$$20d \leqq D$$

**Patentansprüche**

**1.** Oberflächenmodifizierte, organische, kugelförmige Teilchen, die erhaltbar sind durch

a) Emulgieren oder Suspendieren einer Polyepoxydverbindung in einer wässerigen Flüssigkeit, Zugeben eines wasserlöslichen Aminhärtungsmittels zu dieser ungehärteter Epoxysuspension oder -emulsion, Härtenlassen dieser Emulsion in kugelförmige Teilchen, die eine mittlere Teilchengröße D von 0,1 bis 1000 μm haben, und danach

b) Durchführen des Adsorbierens feiner Metall- oder Latexteilchen, die eine mittlere Teilchengröße d haben und die der Beziehung 5 d <= D genügen, auf der Oberfläche besagter Teilchen unter Verwendung eines Naßverfahrens.

**2.** Die organischen, kugelförmigen Teilchen gemäß Anspruch 1., dadurch gekennzeichnet, daß sie eine primäre, sekundäre, tertiäre oder quarternäre Aminogruppe aufweisen.

**3.** Die organischen, kugelförmigen Teilchen gemäß Anspruch 1., dadurch gekennzeichnet, daß die Teilchengrößen D der Beziehung

$$20d \leq D$$

genügen.

**4.** Die organischen, kugelförmigen Teilchen gemäß Anspruch 1., dadurch gekennzeichnet, daß die feinen Metallteilchen aus entweder einem oder mehreren Edelmetall- oder Lötteilchen ausgewählt werden.

**5.** Die organischen, kugelförmigen Teilchen gemäß Anspruch 1., dadurch gekennzeichnet, daß die Latexteilchen aus entweder einer oder mehreren Butadien-, Acrylat-, Styren-, Vinylacetat-, Ethylen-, Vinylchlorid-, Vinylidenchlorid-, Fluorpolymer- und Siliconlatices ausgewählt werden.

**6.** Ein Verfahren für die Herstellung organischer, kugelförmiger Teilchen gemäß Anspruch 1., dadurch gekennzeichnet, daß es das Emulgieren oder Suspendieren einer Polyepoxyverbindung in einer wässerigen Flüssigkeit, dann

Härten mit einem wasserlöslichen Aminhärtungsmittels, um ein disperses Polymer mit Teilchen herzustellen, die eine mittlere Teilchengröße D von 0,1 bis 1000 µm haben, und danach das Durchführen des Adsorbierens von feinen Metallteilchen oder Latexteilchen, die einen mittlere Teilchendurchmesser d haben und der der Beziehung 5 d < D genügen, auf der Oberfläche besagter Teilchen unter Verwendung eines Naßverfahrens umfaßt.

**7.** Das Verfahren für die Herstellung organischer, kugelförmiger Teilchen gemäß Anspruch 6., dadurch gekennzeichnet, daß die Polyepoxyverbindung mit 0,15 oder mehr Äquivalenten der wasserlöslichen Aminverbindung gehärtet wird.

**8.** Das Verfahren für die Herstellung organischer, kugelförmiger Teilchen gemäß Anspruch 7., dadurch gekennzeichnet, daß die wasserlösliche Aminverbindung Piperazin, Hydrazin, ein Polyethylenpolyamin, ein Alkoholamin oder N-(2-Aminoethyl)-piperazin ist.

**9.** Das Verfahren für die Herstellung organischer, kugelförmiger Teilchen gemäß Anspruch 6., dadurch gekennzeichnet, daß die wasserlösliche Aminverbindung ein Piperazionderivat ist, das durch die folgende Formel (I):

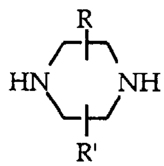

dargestellt ist, worin R und R' jeweils ein Wasserstoffatom oder ein Kohlenwasserstoffrest von 1 bis 4 Kohlenstoffatomen darstellen.

**10.** Das Verfahren für die Herstellung organischer, kugelförmiger Teilchen gemäß Anspruch 6., dadurch gekennzeichnet, daß die wasserlösliche Aminverbindung ein Hydrazinderivat ist, das durch die folgende Formel (II):

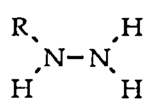

dargestellt ist, worin R Wasserstoff, eine Alkylgruppe von bis zu fünf Kohlenstoffatomen, eine Phenylgruppe oder eine 2-Hydroxyethylgruppe darstellt.

**11.** Das Verfahren für die Herstellung organischer, kugelförmiger Teilchen gemäß Anspruch 6., dadurch gekennzeichnet, daß die Adsorptionsbehandlung eine Behandlung durch Erhitzen und Rühren ist.

**12.** Das Verfahren für die Herstellung organischer, kugelförmiger Teilchen gemäß Anspruch 6., dadurch gekennzeichnet, daß die Adsorptionsbehandlung eine Behandlung durch Rühren in Anwesenheit einer Verbindung, die aus Schwefelsäure, Phosphorsäure, Essigsäure, Salzsäure, Natriumchlorid, Aluminiumchlorid und Natriumhydroxid ausgewählt wurde, ist.

**13.** Das Verfahren für die Herstellung organischer, kugelförmiger Teilchen gemäß Anspruch 6., dadurch gekennzeichnet, daß die Flüssigkeit Wasser ist.

**14.** Das Verfahren für die Herstellung organischer, kugelförmiger Teilchen gemäß Anspruch 6., dadurch gekennzeichnet, daß mittlere Teilchengröße D der organischen, kugelförmigen Teilchen und die mittlere Teilchengröße d der feinen Teilchen in der folgenden Beziehung 5 d ≤ D stehen.

**15.** Das Verfahren für die Herstellung organischer, kugelförmiger Teilchen gemäß Anspruch 6., dadurch gekennzeichnet, daß mittlere Teilchengröße D der organischen, kugelförmigen Teilchen und die mittlere Teilchengröße d der feinen Teilchen in der folgenden Beziehung 20 d ≤ D stehen.

**Revendications**

1. Particules sphériques organiques modifiées en surface, pouvant être obtenues par les étapes consistant à :

   a) émulsionner ou mettre en suspension un composé polyépoxydé dans un liquide aqueux, ajouter à cette suspension ou émulsion de composé époxy non durcie un agent de durcissement de type amine soluble dans l'eau, laisser cette émulsion durcir en particules sphériques ayant une granulométrie moyenne D de 0,1 à 1000 μm, et ensuite
   b) faire adsorber sur la surface desdites particules de fines particules de métal ou de latex ayant une granulométrie moyenne d satisfaisant à la relation $5d \leq D$, au moyen d'un processus par voie humide.

2. Particules sphériques organiques selon la revendication 1, qui ont un groupe amine primaire, secondaire, tertiaire ou quaternaire.

3. Particules sphériques organiques selon la revendication 1, dans lesquelles les granulométries D et d satisfont à la relation :

$$20d \leq D$$

4. Particules sphériques organiques selon la revendication 1, dans lesquelles les fines particules métalliques sont constituées d'un ou plusieurs types de particules choisis parmi les particules de métal noble et les particules de métal de brasage.

5. Particules sphériques organiques selon la revendication 1, dans lesquelles les particules de latex sont constituées d'un ou plusieurs types choisis parmi les latex de butadiène, d'acrylate, de styrène, d'acétate de vinyle, d'éthylène, de chlorure de vinyle, de chlorure de vinylidène, de polymère fluoré et de silicone.

6. Procédé pour la production de particules sphériques organiques selon la revendication 1, qui consiste à émulsionner ou mettre en suspension un composé polyépoxy dans un liquide aqueux, puis à le durcir avec un agent de durcissement de type amine soluble dans l'eau pour produire un polymère particulaire dont les particules ont une granulométrie moyenne de 0,1 à 1000 μm, et ensuite à faire adsorber sur la surface desdites particules de fines particules métalliques ou des particules de latex ayant une granulométrie moyenne satisfaisant à l'équation $5d \leq D$, au moyen d'un processus par voie humide.

7. Procédé pour la production de particules organiques selon la revendication 6, dans lequel le composé polyépoxy est durci avec 0,1 équivalent ou plus du composé d'amine soluble dans l'eau.

8. Procédé pour la production de particules sphériques organiques selon la revendication 7, dans lequel le composé d'amine soluble dans l'eau est la pipérazine, l'hydrazine, une polyéthylène-polyamine, une alcool-amine ou la N-(2-aminoéthyl)pipérazine.

9. Procédé pour la production de particules sphériques organiques selon la revendication 6, dans lequel le composé d'amine soluble dans l'eau est un dérivé de pipérazine représenté par la formule (I) suivante :

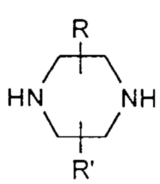

(I)

   dans laquelle chacun de R et R' représente un atome d'hydrogène ou un résidu hydrocarboné ayant de 1 à 4 atomes de carbone.

10. Procédé pour la production de particules sphériques organiques selon la revendication 6, dans lequel le composé d'amine soluble dans l'eau est un dérivé d'hydrazine représenté par la formule (II) suivante :

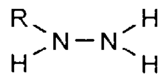

(II)

dans laquelle R représente l'hydrogène, un groupe alkyle ayant jusqu'à 5 atomes de carbone, un groupe phényle ou un groupe 2-hydroxyéthyle.

**11.** Procédé pour la production de particules sphériques organiques selon la revendication 6, dans lequel le traitement d'adsorption est un traitement par chauffage et agitation.

**12.** Procédé pour la production de particules sphériques organiques selon la revendication 6, dans lequel le traitement d'adsorption est un traitement par agitation en présence d'un composé choisi parmi l'acide sulfurique, l'acide phosphorique, l'acide acétique, l'acide chlorhydrique, le chlorure de sodium, le chlorure d'aluminium et la soude caustique.

**13.** Procédé pour la production de particules sphériques organiques selon la revendication 6, dans lequel le liquide est de l'eau.

**14.** Procédé pour la production de particules sphériques organiques selon la revendication 6, dans lequel la granulométrie moyenne D des particules sphériques organiques et la granulométrie moyenne d des fines particules satisfont à la relation suivante :

$$5d \leq D$$

**15.** Procédé pour la production de particules sphériques organiques selon la revendication 6, dans lequel la granulométrie moyenne D des particules sphériques organiques et la granulométrie moyenne d des fines particules satisfont à la relation suivante :

$$20d \leq D$$